(19)

**Europäisches Patentamt**

**European Patent Office**

**Office européen des brevets**

(11) **EP 4 645 250 A1**

(12) **EUROPEAN PATENT APPLICATION**

(43) Date of publication:
05.11.2025 Bulletin 2025/45

(21) Application number: 24173316.1

(22) Date of filing: 30.04.2024

(51) International Patent Classification (IPC):
$G06V\ 10/25$ (2022.01) $\quad$ $G06V\ 10/764$ (2022.01)
$G06V\ 10/82$ (2022.01) $\quad$ $G06V\ 20/58$ (2022.01)
$G06V\ 20/64$ (2022.01)

(52) Cooperative Patent Classification (CPC):
G06V 10/82; G06V 10/25; G06V 10/764;
G06V 20/58; G06V 20/64; G06V 10/761

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Schmarje, Lars**
**24220 Flintbek (DE)**
• **Zhang, Dan**
**71229 Leonberg (DE)**

Remarks:
Amended claims in accordance with Rule 137(2) EPC.

(54) **TRAINING A NEURAL NETWORK FOR A MORE RELIABLE DETECTION OF OBJECTS EVEN IF THEY ARE OF AN UNKNOWN TYPE**

(57)   A method (100) for training a neural network (1) that is configured to extract features (3) from images (2) by means of a feature extractor network (4) and determine, from these features (3), classification scores (5) with respect to one or more classes out of a given set of classes by means of a classifier head (6), the method (100) comprising the steps of:
• providing (110) training images (2a) and respective ground truth classification scores (5a);
• processing (120) these training images (2a) or regions thereof into classification scores (5) with the neural network (1);
• computing (130) the value (7a) of a loss function (7) that is dependent at least on
◦ a deviation of the classification scores (5) from the ground truth classification scores (5a) and on
◦ an objectness contribution that is dependent on the presence or absence of an object, but independent from class information;
and
• optimizing (140) parameters (1a) that characterize the behavior of the neural network (1) towards the goal of improving the value (7a) of the loss function (7).

Fig. 1

## Description

The present invention relates to image classification, and in particular to the detection and/or localization of objects of known and unknown types in images. Such a detection is very important for safety-relevant applications, such as autonomous motion of vehicles or robots.

Background

Autonomously maneuvering a vehicle or robot on company premises, or even in public road traffic, requires a constant monitoring of the surroundings of the vehicle and/or robot. Acquiring and analyzing images of these surroundings is a vital part of such monitoring. It is of particular importance that objects with which the vehicle and/or robot could collide are detected.

Object detectors localize objects of interest and assign, to detected object instances, classification scores with respect to one or more classes of a given classification. That is, they can attribute the image of parts of it to objects of a particular type. However, they have difficulties in reliably detecting out-of-distribution, OOD, objects not seen during training or significantly different from known categories. One example of such an object is cargo, such as a ski or a piece of furniture, lost by another vehicle on the road.

Disclosure of the invention

The invention provides a method for training a neural network. This neural network is configured to extract features from images by means of a feature extractor network. A classifier head of the neural network then uses these features to determine classification scores with respect to one or more classes out of a given set of classes. For example, the feature extractor may comprise one or more convolutional layers, and the classifier head may comprise one or more fully connected layers. On top of the classifier head, the neural network may comprise other heads that make use of the features, such as one or more regressor heads that determine values of any sought quantity.

In the course of the method, training images and respective ground truth classification scores are provided. These training images, or regions thereof, are processed into classification scores with the neural network. That is, an object detector may first detect regions of interest in the image that may be indicative of the presence of object instances, and then the neural network may map each region of interest to classification scores. To rate how good the output of the neural network is, the value of a loss function is computed. This loss function comprises at least two contributions, namely

- a deviation of the classification scores from the ground truth classification scores and
- an objectness contribution that is dependent on the presence or absence of an object, but independent from class information. In particular, this objectness contribution may pertain to a particular region of interest in the image, rather than to the whole image.

The objectness contribution may, for example, be determined from the classification scores, but this is not required. Rather, the objectness contribution may be also determined from other outputs of the neural network, such as from the output of a further head that is dedicated to the objectness, or even directly from the features.

Parameters that characterize the behavior of the neural network are optimized towards the goal of improving the value of the loss function.

The inventors have found that including the objectness contribution into the loss improves the reliability of the detection of objects. In particular, reliability may comprise that, if the image shows the presence of an actual object in a particular place, pixels or other parts of the image that belong to this object will be correctly identified. Also, reliability may comprise that, if the image shows no actual object, no "ghost" object will be detected. The relative importances of these goals depend on the application at hand. For example, in automated driving applications, it is extremely important that if an object is present, this presence is detected, so that a collision between the automated vehicle or robot and the object may be avoided. But in public road traffic, it is also very important that there are no false detection of objects that are in fact not present. A false detection might trigger an emergency braking or evasion maneuver that is in fact not justified. The maneuver may therefore come as a complete surprise to other traffic participants, which may in turn cause rear-end collisions.

An improved detection also of out-of-distribution, unseen objects is particularly important for a quick reaction to completely unexpected situations in road traffic. For example, it is quite unusual to encounter cattle, a couch or a ski on a highway. But if a couch or a ski is indeed present because someone lost it during transport, or if cattle are present because they have escaped from a farm, it is important to trigger the emergency braking and/or evasion.

At the same time, independence of the objectness contribution from class information is different from using only class-agnostic cues in the first place. An objectness contribution that is independent from class information may very well avail itself of features that, in certain combination, are indicative of class. For example, when characterizing persons, certain combinations of values of the features "height", "build" and "facial expression" may be indicative of the class "investment banker", while other combinations of values of these features may be indicative of the class "recalcitrant criminal". The objectness analysis may perfectly use the features "height", "build" and "facial expression" to determine where a person is present in the image at all, independently from the potential class of this person. By contrast, using only class-agnostic cues would mean that the features "height", "build" and "facial expression" are excluded from the analysis whether a person is present at all. This would be a bad thing because, for example, a person walking onto a road between two parked cars might be partially occluded by the parked cars in the image, leaving only the face visible. The feature "facial expression" might then be the only cue that allows to detect the person in time before the person steps onto the road right in front of the automatically controlled ego-vehicle.

In particular, the independence of the objectness contribution from class information ensures that the neural network will really learn a notion of objectness as such in a generic sense, rather than just augmenting the set of classes it knows with a few more classes. This cannot be guaranteed yet by merely exposing the neural network to outliers that do not belong to the original set of classes; such exposure to outliers may just as well trigger learning of a Also, the inference of the trained network will not be slowed down, as it might be, e.g., when merely adding an anomaly detection to an existing neural network. Therefore, real-time performance that is important for autonomous driving and other time-critical applications will not be impeded.

When speaking of objectness in a generic sense, objects usually contain well connected surfaces and have certain geometric structures. Such cues are common across different class categories. Learning such cues to detect the existence of an object allows generalization from the known classes to unknown classes at inference time. This would not be possible if the cues were class specific, as the objectness is biased towards only the known classes.

Learning the objectness during training costs some effort, but the ability to detect objectness does not necessarily cause a large computational burden during inference. This is particularly important for automotive and other mobile applications where hardware resources are limited, while at the same time swift decisions about the presence or absence of objects need to be made. That is, during inference, only a limited amount of extra resources can be devoted to the extra capability of unknown object detection.

Also, the learning of objectness does not degrade the performance of the neural network on the known classes in the given set of classes. For example, if the contribution relating to the classification scores and the objectness contribution are added in the loss function, even it the objectness contribution is too low for a particular training image, this cannot offset a large value of the contribution relating to the classification scores. That is, the neural network cannot avoid the burden of becoming good at determining classification scores by becoming good at determining objectness.

In a particularly advantageous embodiment, the objectness contribution is dependent on the output of a further objectness head of the neural network that predicts, in a class-agnostic manner, at least an occupancy. This occupancy is a measure of whether features are indicative of the presence of an object. This in turn translates into whether particular areas in the image indicate the presence of an actual object. In one example, the objectness head may comprise a few convolutional layers with non-linear activation functions in between. Such an objectness head may predict a single logit value. For example, a sigmoid mapping may then map this single logit value to a value between 0 and 1. In particular, the presence of a dedicated object head provides further possibilities to keep the training for objectness from degrading the performance on known classes. For example, the training for objectness may be restricted to optimizing the parameters that characterize the behavior of the objectness head, while the parameters that characterize the behavior of the classifier head and of the feature extractor remain frozen. Also, the presence of a separate objectness head ensures that the classifier head will output its classification scores with respect to the given known classes without additional delay. That is, the determining of the objectness comes purely on top of the determining of classification scores.

Alternatively or in combination to determining the occupancy with a dedicated objectness head, the occupancy may be determined from the output of a regressor in the neural network. For example, the YOLOX architecture may comprise

- a feature pyramid network, FPN, as a feature extractor that outputs a set of feature maps;
- a regressor head that maps features from the feature maps to bounding box coordinates of detected object instances;
- a classifier head that maps features from the feature maps to class labels of the detected object instances; and
- an objectness head that uses intermediate work products from the regressor head to predict class-agnostic objectness, and may optionally also use features from the classifier head. That is, for example, features from the bounding box regression may be fused with features from the classifier head.

Thus, in a further particularly advantageous embodiment, the neural network is further configured to predict bounding boxes for objects. Such bounding boxes that correspond to object instances provide another notion of objectness that may be plausibilized against the output of an objectness head.

Therefore, in a further particularly advantageous embodiment, the objectness contribution is dependent on how well the occupancy is in agreement with one or more intersections between predicted bounding boxes and ground truth bounding boxes. That is, the predicted bounding box localization may be exploited to yield a ground-truth loss for occupancy prediction: If the predicted bounding box has high overlaps with the ground-truth bounding box annotations, this indicates that the occupancy $o$ should be high; otherwise, the occupancy $o$ should be low. For example, the occupancy $o$ might be compared to the expression

$$\frac{\left| b_p \cap \left( \bigcup_{i=0}^n b_{g_i} \right) \right|}{|b_p|},$$

wherein $|\cdot|$ denotes an area in pixels, $b_p$ is the predicted bounding box, and $b_{g_i}$ represents the i-th bounding box, out of $n$ total, regardless of its class.

In particular, one advantage of this is that the detection of unknown objects does not depend on parts of the image that indicate the presence of an object being sufficient for a positive identification of an object by virtue of a match with ground truth for a particular class. That is, even if the object is partially occluded or otherwise hard to recognize, it can still be detected that there is at least some object. For example, if a vehicle is partially occluded, the concrete type of vehicle (e.g., passenger car, van, or make and model) may be hard to distinguish. Also, if a person is partially visible between parked cars, it does not matter if the concrete type of person cannot be determined. What matters is detecting that there is a person, or more abstractly at least one object that should not be run over.

One way of measuring the agreement between this expression on the one hand and occupancy $o$ on the other hand is cross entropy, e.g., binary cross entropy, BCE. Thus, an objectness contribution $L_{occ}$ to the loss may take the form

$$L_{occ} = BCE\left( o, \frac{\left| b_p \cap \left( \bigcup_{i=0}^n b_{g_i} \right) \right|}{|b_p|} \right).$$

In information theory, cross entropy is a measure for the quality of a model of a (probability) distribution. Optimizing the model parameters towards the goal of minimizing cross entropy therefore works towards maximizing the log-likelihood of the model given the distribution.

One particular advantage of having the occupancy score $o$ is that this occupancy score $o$ may be determined for all images. That is, all available training images may be used to train its determination, not only training images outside the known classes of the given set of classes. By contrast, the training for the determining of a classification score with respect to a newly introduced OOD class is very likely to overfit on the available OOD examples because they are far less in number than the in-distribution training examples.

In the expression for $L_{occ}$, the intersection union computation may be further simplified by the approximation

$$\left| b_p \cap \left( \bigcup_{i=0}^n b_{g_i} \right) \right| = \left| \bigcup_{i=0}^n b_p \cap b_{g_i} \right| \leq \sum_{i=0}^n \left| (b_p \cap b_{g_i}) \right|.$$

That is, rather than computing a quite complex intersection between the predicted bounding box $b_p$ and the union of all ground-truth bounding boxes $b_{g_i}$, smaller and simpler intersections between $b_p$ and the individual ground-truth bounding boxes $b_{g_i}$ may be computed. For most of these intersections, it will be quickly determined that they are empty without diving much into the computation, so there is a net savings in computation time.

Thus, in a further particularly advantageous embodiment, an intersection between a predicted bounding box and a union of ground truth bounding boxes is approximated by a sum of intersections between this predicted bounding box and each ground truth bounding box.

In a further particularly advantageous embodiment, the given set of classes is extended by a further class for objects that do not belong into any class in the given set of classes. In this manner, the classifier head of the neural network gets the opportunity to express the finding that a detected object is an unseen object. That is, the output of the classifier head may differentiate between "no object" on the one hand, and "an object but an unseen one" on the other hand. Without the further OOD class, the classifier head would have to express both "no object" and "an object but an unseen one" with low scores for all given classes, or it might even be tempted to output a high classification score for any of the given classes, all of which are wrong. Also, the additional classification score for the extra class of unseen objects will be obtained during inference at only a little, if any, additional computational burden.

In a further particularly advantageous embodiment, the set of training images is extended with training images that do not belong to any class in the given set of classes. In this manner, the neural network gets improved opportunities to detect unseen objects. The further training images for this extending may come from any suitable source. For example, multiple images from different datasets may be composed into one image using any well-known augmentation technique such as Mosaic or Mixup, so as to expose the neural network to unseen objects. The exposure to diverse objects enhances the acquisition of a more generic understanding of objectness and may be performed in any suitable manner. For example, training images from other datasets may be used, and they may be further modified by any suitable data augmentation technique. In one example, a dataset with training images of traffic situations for automated driving may be extended with further training images from the generic MS COCO (Microsoft Common Objects in Context) large-scale object detection, segmentation and captioning dataset, and/or the LVIS dataset for large vocabulary instance segmentation. In particular, this enhances the tendency of the objectness score to respond to objects from both the known and unknown classes, while remaining silent for "stuff" classes such as road and sky.

In a further particularly advantageous embodiment, images acquired by at least one sensor are processed into classification scores, and optionally also an occupancy and/or an objectness score, by the trained machine learning model. The improved training then has the effect that the detection of objects, be they of classes in the original given set of classes or outside these classes, is made more reliable.

In a further particularly advantageous embodiment, in response to the classification scores, and/or the occupancy, indicating the presence of an object, it is verified using depth information. To this end, depth information for the image region associated with the object is obtained. It is then determined whether this depth information is indicative of depth changes that can be expected given that the object is present. If this determination is negative, i.e., if the expected depth changes are not present, it is determined that the detection of the object is a false detection. In particular, if the image shows features that somehow have the appearance of an object but do not belong to an actual object, these features will not be mis-detected as an object. One example of such features are shadows. While they are produced by the presence of actual objects, they appear in another place where no object is present. Examples for depth changes that indicate the presence of an object include few local depth changes within a bounding box that relates to this object. By contrast, e.g., a flat surface of a road exhibits only continuous local depth changes.

In a further particularly advantageous embodiment, the classification scores and the occupancy are evaluated together in order to verify the presence of an object. To this end, if the classification scores, and/or the occupancy, indicate the presence of an object, the product of the maximum classification score and the occupancy relating to this detected object is computed. If this product is below a predetermined threshold value, it is determined that the detection of the object is a false detection. This works best if there is, as discussed before, a further class for objects that do not belong into any class in the given set of classes. The presence of an object may then be confirmed by two independent heads, namely the classifier head and the objectness head, before it is concluded that an object is actually present.

In a further particularly advantageous embodiment, based at least in part on classification scores and/or occupancy outputted by the trained machine learning model, and/or on detections of objects, an actuation signal is computed. A vehicle, a robot, a driving assistance system, a quality inspection system, a surveillance system, and/or a medical imaging system is then actuated with the actuation signal. In this manner, the probability that the reaction of the respective actuated system to the actuation signal is appropriate in the situation characterized by the acquired images is improved. In particular, less reactions that should be performed in response to the actual presence of objects are missed, and less reactions are performed in response to detections of objects that do not correspond to actually present objects. For example, in an automated driving system, an emergency braking or evasion maneuver will be more reliably triggered if an object is indeed present in the path of the vehicle, but there will be no emergency braking or evasion maneuvers "out of the blue" for no apparent reason if no object is in fact present in the path of the vehicle.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

Description of the Figures

Figure 1: Exemplary embodiment of the method 100 for training a neural network 1;

Figure 2: Visualization of an exemplary processing pipeline for training and inference according to the method 100;

Figure 3: Examples of images that give rise to false object detections.

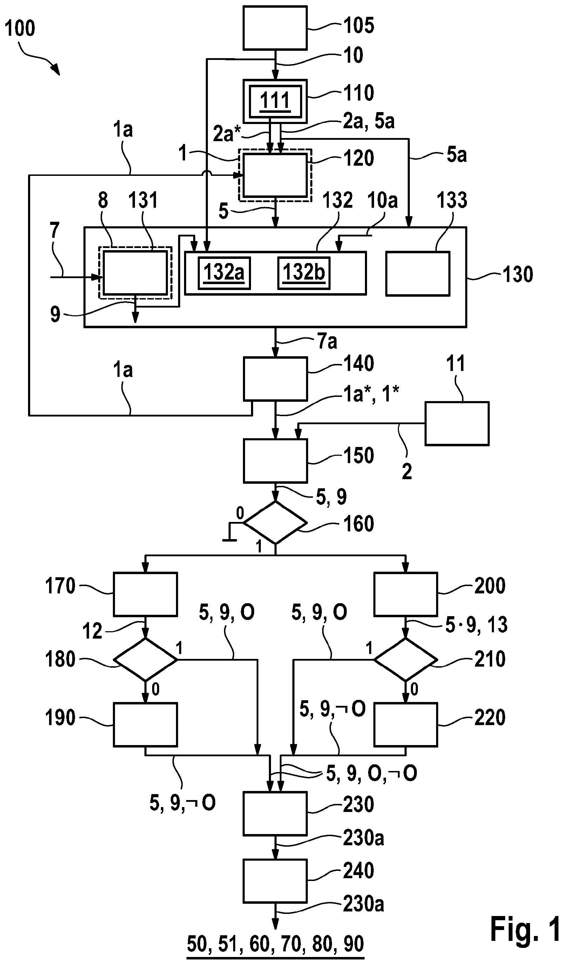

Figure 1 is a schematic flow chart of an exemplary embodiment of the method 100 for training a neural network 1 that is configured to:

- extract features 3 from images 2 by means of a feature extractor network 4 and
- determine, from these features 3, classification scores 5 with respect to one or more classes out of a given set of classes by means of a classifier head 6.

According to block 105, the neural network 1 may be further configured to predict bounding boxes 10 for objects detected in the images 2.

In step 110, training images 2a and respective ground truth classification scores 5a are provided.

According to block 111, the set of training images 2a may be extended with training images 2a* that do not belong to any class in the given set of classes.

In step 120, the training images 2a are processed into classification scores 5 with the neural network 1.

In step 130, the value 7a of a given loss function 7 is computed. The loss function 7 is dependent at least on

- a deviation of the classification scores 5 from the ground truth classification scores 5a and on
- an objectness contribution that is dependent on the presence or absence of an object, but independent from class information.

According to block 131, the objectness contribution may be dependent on the output of a further objectness head 8 of the neural network 1 that predicts, in a class-agnostic manner, an occupancy 9. This occupancy 9 is a measure of whether features 3 are indicative of the presence of an object.

According to block 132, the objectness contribution may be dependent on how well the occupancy 9 is in agreement with one or more intersections between predicted bounding boxes 10 and ground truth bounding boxes 10a,

According to block 132a, an intersection between a predicted bounding box 10 and a union of ground truth bounding boxes 10a may be approximated by a sum of intersections between this predicted bounding box 10 and each ground truth bounding box 10a.

According to block 132b, agreement between occupancy 9 and intersections may be measured by cross entropy.

According to block 133, the given set of classes may be extended by a further class for objects that do not belong into any class in the given set of classes.

In step 140, parameters 1a that characterize the behavior of the neural network 1 are optimized towards the goal of improving the value 7a of the loss function 7. The finally optimized state of the parameters is labelled with the reference sign 1 a* and characterized the trained state 1* of the neural network 1.

In the example shown in Figure 1, in step 150, images 2 acquired by at least one sensor 11 are processed into classification scores 5, and optionally also an occupancy 9 and/or an objectness score, by the trained machine learning model 1 *.

In step 160, it is checked whether the classification scores 5, and/or the occupancy 9, and/or the objectness score, indicate the presence of an object. If this is the case (truth value 1), false positive detections may be eliminated by one or both of the following approaches, which may also be performed repeatedly on multiple instances of detected objects.

According to the first approach, in step 170, depth information 12 for the image region associated with the object (labelled O here) is obtained. It is then determined, in step 180, whether this depth information 12 is indicative of depth changes that can be expected given that the object is present. If this is not the case (truth value 0), it is determined, in step 190, that the detection of the object O is a false detection.

According to the second approach, in step 200, the product 13 of the maximum classification score 5 and the occupancy 9 relating to this detected object O is computed. In step 210, it is checked whether this product 13 is above a predetermined threshold value 14. If this is not the case (truth value 0), in step 220, it is determined that the detection of the object O is a false detection.

In step 230, based at least in part on classification scores 5 and/or occupancy 9 outputted by the trained machine learning model 1, and/or on detections of objects O, an actuation signal 230a is computed. In step 240, a vehicle 50, a driving assistance system 51, a robot 60, a quality inspection system 70, a surveillance system 80, and/or a medical imaging system 90, is actuated with the actuation signal 230a.

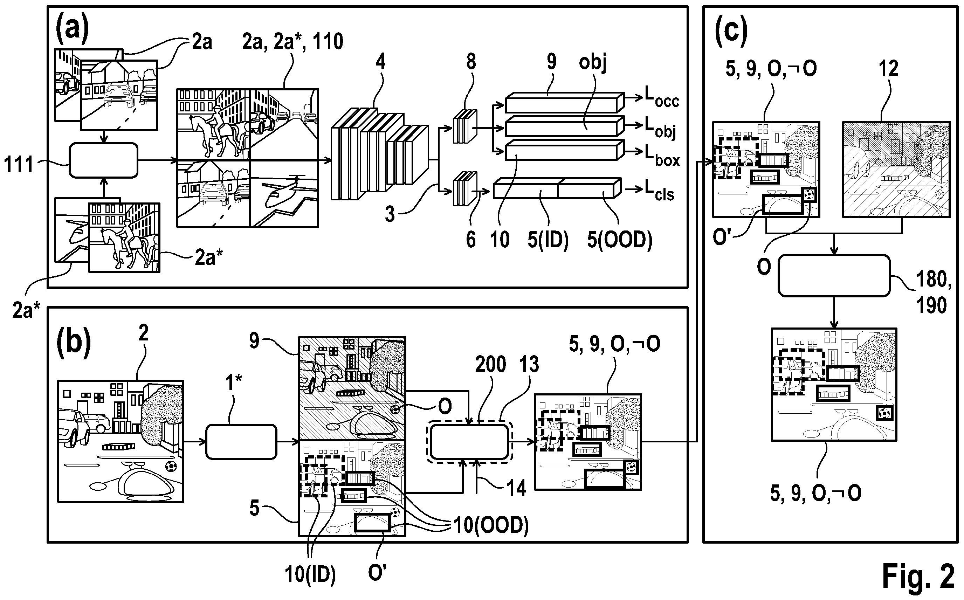

Figure 2 illustrates exemplary processing pipelines for training and for inference according to the method 100 described above.

Figure 2a shows the pipeline for the training. According to block 111, training images 2a from the domain of the application at hand, here: automated driving, are combined with further training images 2a* from outside this domain. The combined set of training images is supplied to the feature extractor 4 of the neural network 1. This produces extracted features 3.

The extracted features 3 are supplied to a classifier head 6 that produces classification scores 5 with respect to in-distribution classes, ID, out of a given set of classes, and also with respect to a new out-of-distribution class, OOD, relating to objects of unknown classes.

The extracted features 3 are also supplied to an objectness head 8. This objectness head 8 predicts, in a class agnostic manner, at least an occupancy 9. This occupancy 9 is a measure of whether features 3 are indicative of the presence of an object. In the example shown in Figure 2, the objectness head 8 is further configured to determined the "obj" score that is a further notion of objectness. The objectness head 8 also serves to predict bounding boxes 10 of objects.

In the example shown in Figure 2, the training of the neural network 1 is directed to the objectives that:

- predicted bounding boxes 10 correspond to ground truth bounding boxes 10a, as measured by the loss component $L_{box}$;
- the occupancy 9 is in agreement with bounding boxes 10, 10a, as measured by the loss component $L_{occ}$;
- the object score "obj" is in agreement with available ground truth, as measured in any suitable manner by the loss component $L_{obj}$; and
- the classification scores 5 correspond to ground truth classification scores 5a, as measured by the classification loss component $L_{cls}$.

Figure 2b starts from the assumption that the neural network 1 has been trained according to the pipeline shown in Figure 2a. Figure 2b shows an exemplary inference pipeline. An image 2 is supplied to the trained neural network 1*. The neural network 1* then outputs both an occupancy map 9 of the image 2 and classification scores 5, visualized by bounding boxes 10(ID) for in-distribution objects of known classes, and 10(OOD) for out-of-distribution objects of unknown classes.

In the example shown in Figure 2b, the occupancy map 9 has a high occupancy score for one exemplary object O whose presence is not indicated by the classification scores 5. Also, the classification scores 5 indicate the presence of one other object O' that is not evident from the occupancy map 9. In step 200, products 13 of classification scores 5 and occupancy maps 9 are computed, and wherever the product is above the threshold 14, it is determined that an object O is present. In the example shown in Figure 2, the total set of detected objects O is the union set of objects detected both by virtue of the classification scores 5 and by virtue of the occupancy map 9.

Figure 2c shows how these objects O are further filtered by means of depth information 12 according to steps 180 and 190 of the method 100. In the example shown in Figure 2, for the object O, there is matching depth information 12, so this object O is kept. By contrast, for the object O', no matching depth information 12 is available. Therefore, this object O' is discarded as a false detection.

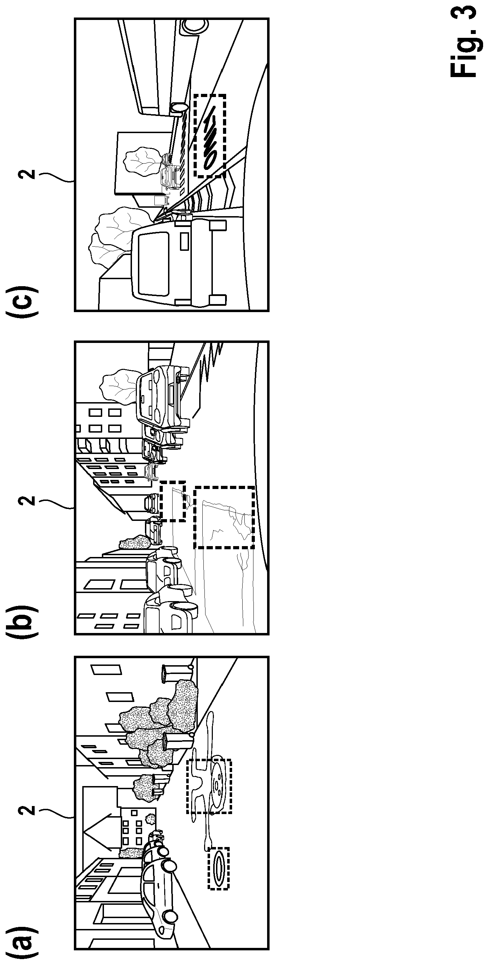

Figure 3 gives some examples of images 2 of road scenes that give rise to false object detections. Bounding boxes for these false detections are drawn in dashed lines.

In Figure 3a, which is taken from the Fishyscapes dataset, a manhole cover that is flush with the road surface, and a graffito painted on the road surface, give rise to false detections.

In Figure 3b, which is taken from the Cityscapes dataset, subtle texture changes in the road resulting from road surface repair give rise to false detections.

In Figure 3c, which is taken from the BDD100K dataset, a road marking gives rise to a false detection.

**Claims**

1. A method (100) for training a neural network (1) that is configured to extract features (3) from images (2) by means of a feature extractor network (4) and determine, from these features (3), classification scores (5) with respect to one or more classes out of a given set of classes by means of a classifier head (6), the method (100) comprising the steps of:

   • providing (110) training images (2a) and respective ground truth classification scores (5a);
   • processing (120) these training images (2a) or regions thereof into classification scores (5) with the neural network (1);
   • computing (130) the value (7a) of a loss function (7) that is dependent at least on

      ◦ a deviation of the classification scores (5) from the ground truth classification scores (5a) and on

    ◦ an objectness contribution that is dependent on the presence or absence of an object, but independent from class information;

and
    • optimizing (140) parameters (1a) that characterize the behavior of the neural network (1) towards the goal of improving the value (7a) of the loss function (7).

2. The method (100) of claim 1, wherein the objectness contribution is dependent (131) on the output of a further objectness head (8) of the neural network (1) that predicts, in a class-agnostic manner, at least an occupancy (9) that is a measure of whether features (3) are indicative of the presence of an object.

3. The method (100) of any one of claims 1 to 2, wherein the neural network (1) is further configured (105) to predict bounding boxes (10) for objects.

4. The method (100) of claims 2 and 3, wherein the objectness contribution is dependent (132) on how well the occupancy (9) is in agreement with one or more intersections between predicted bounding boxes (10) and ground truth bounding boxes (10a).

5. The method (100) of claim 4, wherein an intersection between a predicted bounding box (10) and a union of ground truth bounding boxes (10a) is approximated (132a) by a sum of intersections between this predicted bounding box (10) and each ground truth bounding box (10a).

6. The method (100) of any one of claims 4 to 5, wherein agreement between occupancy (9) and intersections is measured (132b) by cross entropy.

7. The method (100) of any one of claims 1 to 6, wherein the given set of classes is extended (133) by a further class for objects that do not belong into any class in the given set of classes.

8. The method (100) of claim 7, wherein the set of training images (2a) is extended (111) with training images (2a*) that do not belong to any class in the given set of classes.

9. The method (100) of any one of claims 1 to 8, further comprising: processing (150) images (2) acquired by at least one sensor (11) into classification scores (5), and optionally also an occupancy (9) and/or an objectness score, by the trained machine learning model (1*).

10. The method (100) of claim 9, further comprising, in response to the classification scores (5), and/or the occupancy (9), and/or the objectness score, indicating (160) the presence of an object (O):

    • obtaining (170) depth information (12) for the image region associated with the object (O);
    • determining (180) whether this depth information (12) is indicative of depth changes that can be expected given that the object (O) is present; and
    • if this determination is negative, determining (190) that the detection of the object (O) is a false detection.

11. The method (100) of any one of claims 9 to 10, further comprising: in response to the classification scores (5), and/or the occupancy (9), and/or the objectness score, indicating (160) the presence of an object (O):

    • computing (200) the product (13) of the maximum classification score (5) and the occupancy (9) relating to this detected object (O); and
    • if this product (13) is (210) below a predetermined threshold value (14), determining (220) that the detection of the object (O) is a false detection.

12. The method (100) of any one of claims 9 to 11, further comprising

    • computing (230), based at least in part on classification scores (5) and/or occupancy (9) outputted by the trained machine learning model (1), and/or on detections of objects (O), an actuation signal (230a); and
    • actuating (240) a vehicle (50), a driving assistance system (51), a robot (60), a quality inspection system (70), a surveillance system (80), and/or a medical imaging system (90), with the actuation signal (230a).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.

**Amended claims in accordance with Rule 137(2) EPC.**

1. A method (100) for training a neural network (1) that is configured to extract features (3) from images (2) by means of a feature extractor network (4) and determine, from these features (3), classification scores (5) with respect to one or more classes out of a given set of classes by means of a classifier head (6), the method (100) comprising the steps of:

   • providing (110) training images (2a) and respective ground truth classification scores (5a);
   • processing (120) these training images (2a) or regions thereof into classification scores (5) with the neural network (1);
   • computing (130) the value (7a) of a loss function (7) that is dependent at least on

     ◦ a deviation of the classification scores (5) from the ground truth classification scores (5a) and on
     ◦ an objectness contribution that is dependent on the presence or absence of an object, but independent from class information, wherein the objectness contribution is dependent (131) on the output of a further objectness head (8) of the neural network (1) that predicts, in a class-agnostic manner, at least an occupancy (9) that is a measure of whether features (3) are indicative of the presence of an object.; and

   • optimizing (140) parameters (1a) that characterize the behavior of the neural network (1) towards the goal of improving the value (7a) of the loss function (7).

2. The method (100) of claim 1, wherein the neural network (1) is further configured (105) to predict bounding boxes (10) for objects.

3. The method (100) of claims 1 and 2, wherein the objectness contribution is dependent (132) on how well the occupancy (9) is in agreement with one or more intersections between predicted bounding boxes (10) and ground truth bounding boxes (10a).

4. The method (100) of claim 3, wherein an intersection between a predicted bounding box (10) and a union of ground truth bounding boxes (10a) is approximated (132a) by a sum of intersections between this predicted bounding box (10) and each ground truth bounding box (10a).

5. The method (100) of any one of claims 3 to 4, wherein agreement between occupancy (9) and intersections is measured (132b) by cross entropy.

6. The method (100) of any one of claims 1 to 5, wherein the given set of classes is extended (133) by a further class for objects that do not belong into any class in the given set of classes.

7. The method (100) of claim 6, wherein the set of training images (2a) is extended (111) with training images (2a*) that do not belong to any class in the given set of classes.

8. The method (100) of any one of claims 1 to 7, further comprising: processing (150) images (2) acquired by at least one sensor (11) into classification scores (5), and optionally also an occupancy (9) and/or an objectness score, by the trained machine learning model (1*).

9. The method (100) of claim 8, further comprising, in response to the classification scores (5), and/or the occupancy (9), and/or the objectness score, indicating (160) the presence of an object (O):

   • obtaining (170) depth information (12) for the image region associated with the object (O);

• determining (180) whether this depth information (12) is indicative of depth changes that can be expected given that the object (O) is present; and
• if this determination is negative, determining (190) that the detection of the object (O) is a false detection.

10. The method (100) of any one of claims 8 to 9, further comprising: in response to the classification scores (5), and/or the occupancy (9), and/or the objectness score, indicating (160) the presence of an object (O):

• computing (200) the product (13) of the maximum classification score (5) and the occupancy (9) relating to this detected object (O); and
• if this product (13) is (210) below a predetermined threshold value (14), determining (220) that the detection of the object (O) is a false detection.

11. The method (100) of any one of claims 8 to 10, further comprising

• computing (230), based at least in part on classification scores (5) and/or occupancy (9) outputted by the trained machine learning model (1), and/or on detections of objects (O), an actuation signal (230a); and
• actuating (240) a vehicle (50), a driving assistance system (51), a robot (60), a quality inspection system (70), a surveillance system (80), and/or a medical imaging system (90), with the actuation signal (230a).

12. A computer program, comprising machine-readable instructions that, when executed by one or more computers and/or compute instances, cause the one or more computers and/or compute instances to perform the method (100) of any one of claims 1 to 11.

13. A non-transitory machine-readable storage medium, and/or a download product, with the computer program of claim 12.

14. One or more computers and/or compute instances with the computer program of claim 12, and/or with the non-transitory machine-readable storage medium and/or download product of claim 13.

Fig. 1

Fig. 2

(a) 2

(b) 2

(c) 2

Fig. 3

# EP 4 645 250 A1

| | Europäisches Patentamt European Patent Office Office européen des brevets | **EUROPEAN SEARCH REPORT** | **Application Number** EP 24 17 3316 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zolfi Alon ET AL: "YolOOD: Utilizing Object Detection Concepts for Multi-Label Out-of-Distribution Detection", arXiv, 21 November 2023 (2023-11-21), pages 1-10, XP093214833, Retrieved from the Internet: URL:https://arxiv.org/pdf/2212.02081 [retrieved on 2024-10-14] | 1-9, 11-15 | INV. G06V10/25 G06V10/764 G06V10/82 G06V20/58 G06V20/64 |
| Y | * section 3 * * figure 3 * * section 4.1 * ----- | 10 | |
| Y | Huang Chengjie ET AL: "Out-of-Distribution Detection for LiDAR-based 3D Object Detection", arXiv, 28 September 2022 (2022-09-28), pages 1-7, XP093214834, Retrieved from the Internet: URL:https://arxiv.org/pdf/2209.14435 [retrieved on 2024-10-14] * section V * ----- | 10 | |
| | | | TECHNICAL FIELDS SEARCHED (IPC) G06V |

The present search report has been drawn up for all claims

| Place of search | Date of completion of the search | Examiner |
|---|---|---|
| The Hague | 14 October 2024 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)